# EUROPEAN PATENT APPLICATION

(11) **EP 1 107 606 A1**
(43) Date of publication of application: **13.06.2001**
(21) Application number: 00310898.2
(22) Date of filing: 07.12.2000
(51) Int. Cl.: H04N 7/26

(54) **Image processing apparatus and method and storage medium**

(30) Priority: 09.12.1999 JP 35046999; 21.11.2000 JP 2000354506
(71) Applicant: CANON KABUSHIKI KAISHA, Tokyo (JP)
(72) Inventor: Kajiwara, Hiroshi, Ohta-ku, Tokyo (JP); Sato, Makoto, Ohta-ku, Tokyo (JP); Kishi, Hiroki, Ohta-ku, Tokyo (JP)
(74) Representative: Beresford, Keith Denis Lewis

(57) **Abstract**

A color transform unit transforms RGB components constructing image data into C1 to C3 components. Discrete wavelet transform units perform wavelet transform on the C1 to C3 components and generates coefficients of different number of subbands for at least two components. Coding units stepwisely perform reversible transform on the coefficients in a subband unit, and store the code data into buffers. A fixed-length data reading unit reads the code data stored in the buffers by fixed lengths, and a code output unit outputs code data where the read code data are arrayed.

## Description

### FIELD OF THE INVENTION

The present invention relates to an image processing apparatus for inputting and encoding image data and its method and storage medium.

### BACKGROUND OF THE INVENTION

As an image contains a very large amount of information, the voluminous data amount causes a problem when the image information is stored or transmitted. Upon storage or transmission of such image information, efficient coding is performed to reduce the data amount of image information by removing the redundancy of the image information or further processing pixel values of image information to a visually-unrecognizable level.

Especially in a case of color image information, as the difference of chrominance component is more conspicuous in comparison with the difference of luminance component, generally, upon reduction, the amount of chrominance component data is a larger than that of luminance component. For example, in a case where RGB color image data is encoded by using the international standard method of still-picture coding, JPEG, the RGB image data is often color-transformed to YCrCb data before the coding processing is performed, and the transformed data is JPEG-encoded. In this case, generally, to utilize the characteristic of human eyes to colors as described above, subsampling processing to reduce the number of samples of chrominance component and/or processing to enlarge quantization step for chroinance component are performed after the color transform.

In recent years, in purposes of compressing image data for medical practice, preserving of image original and the like, there is an increasing need for an information-preserving type (lossless) coding method which completely reproduces an original image upon compression and/or expansion of image data. In such coding method, information loss due to a coding algorithm and/or information loss due to color transform and/or subsampling are not permitted. Accordingly, in case of lossless coding, the ratio of compression is not as high as that in information-losing type (lossy) coding, and the amount of code data cannot be greatly reduced. To transmit the code data obtained by this coding, it still takes much time.

Conventionally, when an image is encoded and transmitted, progressive coding is used so as to perform coding such that the outline of sent encoded image can be grasped in early step on the receiving side. However, when color image data is progressively encoded by a lossless method, as the coding cannot be combined with subsampling and/or quantization, a received code data image cannot be decoded and reproduced efficiently in the middle of transmitting. Thus the lossless coding cannot be considered as efficient coding utilizing color image characteristic.

### SUMMARY OF THE INVENTION

The present invention has been made in consideration of the above situation, and has as a concern to provide image processing apparatus and method and storage medium, for encoding plural components constructing image data in frequency-transformed subband units, and arranging the coded data in subband units to obtain code data arrays, thereby enabling reproduction of image in correspondence with a stage at which the code data is inputted.

Another concern of the present invention is to provide image processing apparatus and method and storage medium, for reproducing an image in excellent image quality utilizing the characteristic of human eyes to colors in the middle of image transmission, and further finally reproducing the image without information loss, by decomposing image luminance and chrominance components into subbands, encoding the subbands, and arranging the coded data in subband units to obtain coded data arrays.

Other features and advantages of the present invention will be apparent from the following description taken in conjunction with the accompanying drawings, in which like reference characters designate the same name or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing the construction of image processing apparatus according to a first embodiment of the present invention;
Figs. 2A to 2C are image samples explaining two-dimensional wavelet transform according to the embodiments;
Fig. 3 is an explanatory view of the structure of code data stored in a buffer in the first embodiment;
Fig. 4 is an explanatory view of the structure of code data array outputted in the first embodiment;
Fig. 5 is a flowchart showing coding processing in the image processing apparatus according to the first embodiment;
Fig. 6 is a block diagram showing the construction of the image processing apparatus according to a second embodiment of the present invention;
Figs. 7A to 7C are image samples explaining subband analysis according to the second embodiment;
Fig. 8 is an explanatory view of the structure of output code data array in the second embodiment;
Fig. 9 is a flowchart showing the coding processing in the image processing apparatus according to the second embodiment;
Fig. 10 is a block diagram showing the construction of the image processing apparatus according to a third embodiment of the present invention;
Fig. 11 is an image sample explaining the subband analysis according to the third embodiment;
Fig. 12 is an explanatory view of the structure of the output code data array in the third embodiment;
Fig. 13 is a block diagram showing the construction of the image processing apparatus according to a fourth embodiment of the present invention;
Figs. 14A and 14B are image samples explaining the subband analysis according to the fourth embodiment;
Fig. 15 is an image sample explaining coefficient block cutting in the fourth embodiment;
Fig. 16 is an explanatory view of dividing coefficient block code data into higher-order bit plane code data and lower-bit plane code data in the fourth embodiment;
Fig. 17 is a flowchart showing processing by a code data reading unit according to the fourth embodiment;
Fig. 18 is a table showing the relation among a color component C, a level L and the number of subbands in the fourth embodiment;
Fig. 19 is a table showing subbands specified by the level L and a subband number i; and
Fig. 20 is an explanatory view of the structure of the code data array outputted from the image processing apparatus according to the fourth embodiment.

### DETAILED DESCRIPTION OF THE PREFERRED EMBODIMENTS

Preferred embodiments of the present invention will now be described in detail in accordance with the accompanying drawings.

### [First Embodiment]

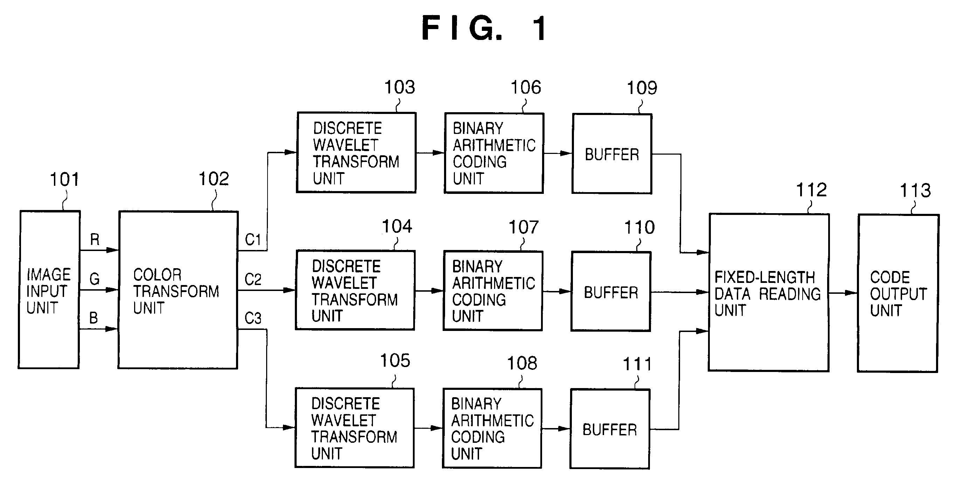

Fig. 1 is a block diagram showing the construction of image processing apparatus according to a first embodiment of the present invention.

In Fig. 1, reference numeral 101 denotes an image input unit; numeral 102 denotes a color transform unit; numerals 103 to 105 denote discrete wavelet transform units; numerals 106 to 108 denote binary arithmetic coding units; numerals 109 to 111 denote buffers; 112, a fixed-length data reading unit; and numeral 113 denotes a code output unit.

In the present embodiment, color image data represented as respectively 8-bit RGB data is encoded. However, the present invention is not limited to the RGB data but is applicable to coding of color image represented in any other color space.

Hereinbelow, operations of the respective elements in the present embodiment will be described with reference to Fig. 1.

First, all the pixel data representing an image as a coding target are inputted in raster-scan order from the image input unit 101. In the present embodiment, as the pixel data, RGB data representing each pixel are inputted in this order. The image input unit 101 may be an image sensing device such as a scanner or a digital camera, or an image sensing unit such as a CCD, or an interface of a network line, or the like. When the image data constructing one pixel has been inputted from the image input unit 101, i.e., the B data has been inputted, the image data is sent to the color transform unit 102.

The color transform unit 102 uses these three primary color RGB values to obtain C1, C2 and C3 components by the following equations, and outputs them to the discrete wavelet transform units 103 to 105.$\text{C1=(R-G)+255}$$\text{C2=G}$$\text{C3=(B-G)+255}$

Then the C1 component is encoded by the discrete wavelet transform unit 103 and the binary arithmetic coding unit 106, and the code data is stored into the buffer 109. The C2 component is encoded by the discrete wavelet transform unit 104 and the binary arithmetic coding unit 107, and the code data is stored into the buffer 110. The C3 component is encoded by the discrete wavelet transform unit 105 and the binary arithmetic coding unit 108, and the code data is stored into the buffer 111. Since the same coding processing is performed on the C1, C2 and C3 components, the coding of Cl component will be described.

The discrete wavelet transform unit 103 temporarily stores received data into an internal buffer (not shown). When all the pixel data of some image has been inputted from the image input 101 and image data for one image frame of the Cl component has been stored in the internal buffer, the discrete wavelet transform unit 103 performs two-dimensional discrete wavelet transform while appropriately performing buffering inside, to generate coefficients of four LL, LH, HL and HH subbands. In the present embodiment, the two-dimensional discrete wavelet transform is made by applying one-dimensional discrete wavelet transform by the following equations in horizontal and vertical directions.$\text{r(n)=floor[{x(2n)+x(2n+1)}/2]} \text{d(n)=x(2n+2)-x(2n+3)+floor[{-r(n)+r(n+2)+2}/4]}$

Note that in the above equations (1), x(i) denotes the i-th value (i=2n, 2n+1, 2n+2,...) of one-dimensional data array as a transform target; r(n) denotes the n-th coefficient of low-frequency subband (L); d(n) denotes the n-th coefficient of high-frequency subband (H); and floor[X], a maximum integer value not exceeding X.

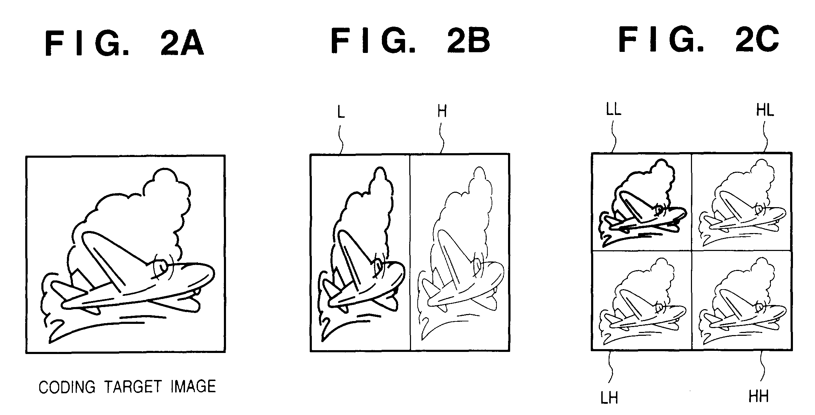

Figs. 2A to 2C show examples of decomposition of coding target image (Fig. 2A) into four subbands by applying the one-dimensional discrete wavelet transform in horizontal and vertical directions, respectively. Fig. 2B shows an example where the one-dimensional discrete wavelet transform in the vertical direction is performed on the target image in Fig. 2A, and Fig. 2C shows an example where the one-dimensional discrete wavelet transform in the horizontal direction is performed on the result in Fig. 2B.

The transform coefficients generated by the two-dimensional discrete wavelet transform are stored into the internal buffer of the discrete wavelet transform unit 103.

When the discrete wavelet transform unit 103 performs the wavelet transform on the Cl component of the coding target image data, the binary arithmetic coding unit 106 encodes the wavelet transform coefficients stored in the discrete wavelet transform unit 103, in the order of subbands, LL, LH, HL and HH, and stores the respective codes into the buffer 109.

In the coding of the respective subbands by the binary arithmetic coding unit 106, the absolute values of the respective subband coefficients are represented as natural binary numbers, and coding is made by unit of bit plane having binary data corresponding to respective digits. The respective bits within each bit plane (hereinafter, referred to as "coefficient bits") are arithmetically encoded sequentially from the most significant bit (MSB) plane to the least significant bit (LSB) plane.

In the present embodiment, as the arithmetic coding method, a QM-Coder is used. The procedure to encode a binary symbol occurred in some contexts by the QM-Coder or initialization procedure and termination procedure for the arithmetic coding processing are described in detail in the international still-picture standard ITU-T Recommendation T. 81|ISO/IEC 10918-1 and the like, therefore, the explanations of the procedures will be omitted, and the method for determining the context S upon encoding each binary symbol will be described.

In the present embodiment, coding is performed in simply 16 contexts by four precedent coefficient bits of coefficient bit of interest. Assuming that coefficient bit of interest is represented as b(n), an immediately preceding coefficient bit, b(n-1), and bits preceding the bit, b(n-2), b(n-3) and b(n-4), the context S is determined by b(n-4)x8+b(n-3)x4+b(n-2)x2+b(n-1). In this context, the coefficient bits are sequentially arithmetically-encoded by the QM-Coder, thus codes are generated. In the QM-Coder, the probability of occurrence of the next symbol is estimated from coded symbol array, by each context, and coding is performed in correspondence with the probability of occurrence of symbol in each context. In a case where a coded coefficient bit is "1", and all the high-order bits of the coefficient, i.e., already-coded bits of the coefficients are "0", a bit representing a sign (+/-) of the coefficient (hereinafter referred to as a "sign bit") is binary arithmetically-encoded. The arithmetic coding of the sign bit is performed as one context not overlapping with coefficient bit coding (e.g., context number S=16).

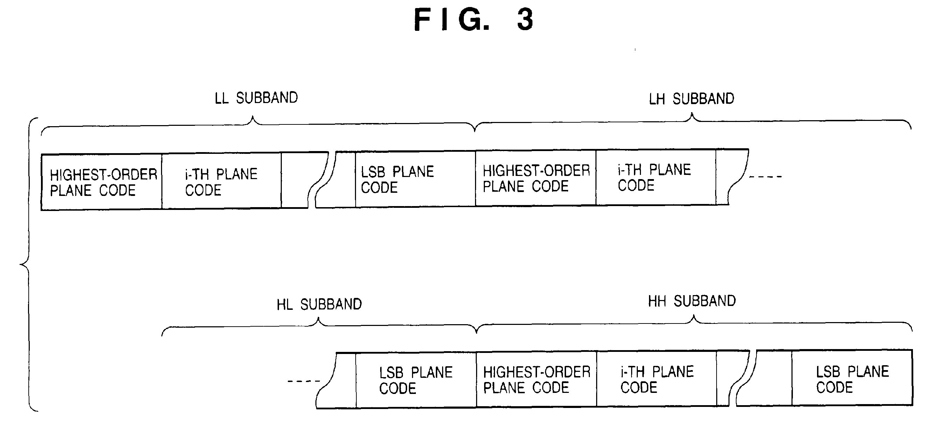

When the binary arithmetic coding unit 106 has encoded the coefficients of all the subbands, a code array as shown in Fig. 3 is stored in the buffer 109.

As to the above C2 and C3 components, similar processings are performed, and code arrays are stored into the buffers 110 and 111. The code data arrays stored in the buffers 109 to 111 are obtained by reversible coding on the respective C1, C2 and C3 components, and the respective components can be completely reproduced from the code data arrays.

When the code data arrays of the respective C1, C2 and C3 components have been stored into the buffers 109 to 111, the fixed-length data reading unit 112 reads the code data arrays, by predetermined numbers of bytes for respective components, from the buffers 109 to 111, and outputs the read data. The numbers of reading bytes are determined for the respective components, e.g., 8 bytes from the C1 and C3 components, and 32 bytes from the C2 component. Further, the code data are read by the units of predetermined numbers of bytes, by, e.g., reading data from the C1 component by 8 bytes, reading data from the C2 component by 32 bytes, reading data from the C3 component by 8 bytes, and again reading data from the C1 component by 8 bytes. In this manner, the code data of predetermined lengths are read from the respective buffers, and in one component, when the end of code data comes before becoming the predetermined length, a value "0" is added until the read data has the predetermined number of bytes. Thereafter, data is not read from the buffer where the read data has reached the end.

The code output unit 113 outputs the code arrays outputted from the fixed-length data reading unit 112 to the outside of the apparatus. The code output unit 113 may be a storage device such as a hard disk or a memory or an interface of network line, or the like. Upon code output from the code output unit 113, a header including additional information necessary for decoding such as the numbers of horizontal and vertical pixels, the number of bits of respective R, G and B data per one pixel, the unit code lengths to read the respective components (in the above example, 8 bytes for the C1 and C3 components, and 32 bytes for the C2 component) is generated, and the header is added to the code array.

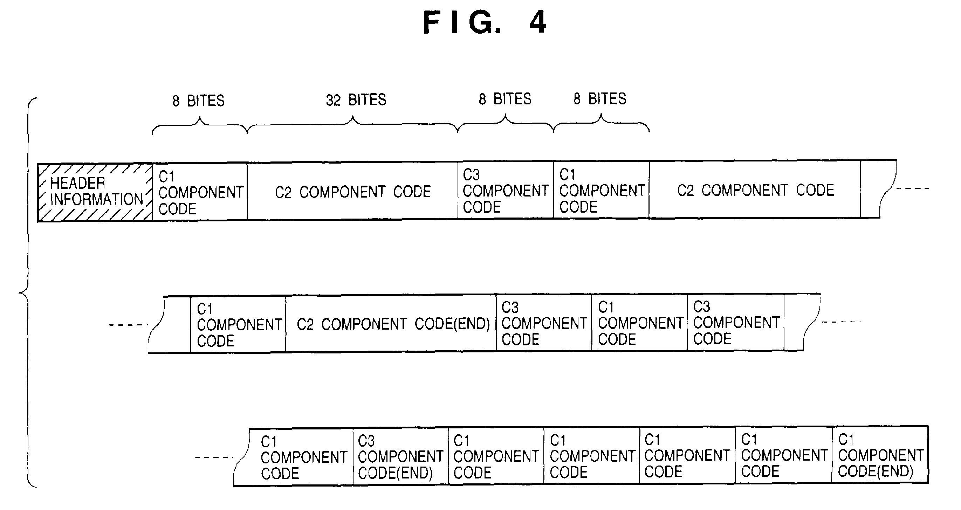

Fig. 4 shows the structure of code data array outputted from the code output unit 113 in a case where the necessary information is added as the header to the head of the code array.

Fig. 4 shows the code array, read from in the order of C2, then C3, to C1, has been completed. It is understood that the code data of the C1, C2 and C3 components by the predetermined numbers of bytes are sequentially arrayed, and regarding a component of which reading of code data has been completed, further data reading is not performed.

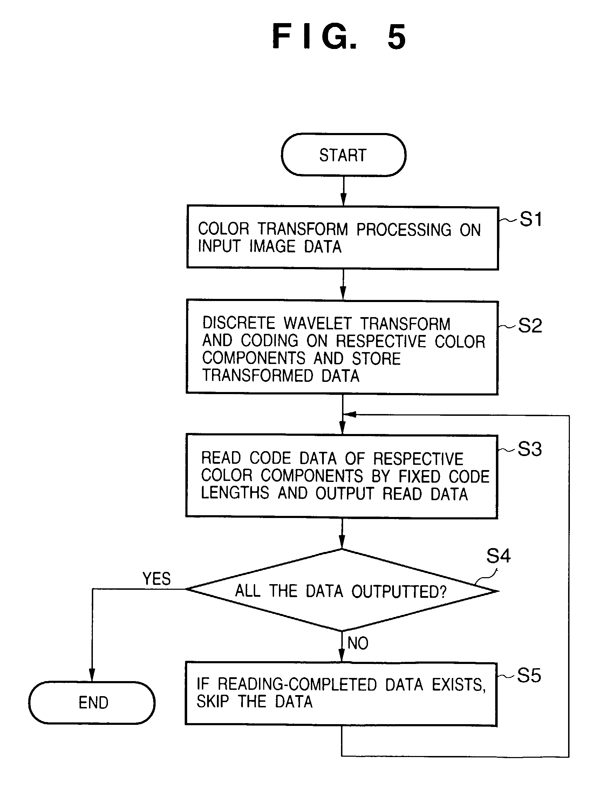

Fig. 5 is a flowchart showing processing to output the code data by the image processing apparatus according to the first embodiment.

First, at step S1, image data is inputted, then color transform processing is performed on the RGB components of the input image data, and color component signals represented by, e.g., C1 to C3 as above, are outputted. Next, at step S2, the respective color component signals are encoded by the discrete wavelet transform and the binary arithmetic coding processing, and the code data of the respective components are stored into the respective buffers. Next, at step S3, the stored code data of the respective color components are read by the fixed lengths and outputted as code data. At step S4, it is examined whether or not reading of all the code data has been completed. If the reading of all the code data has not been completed, the process proceeds to step S5, at which if a code data of which reading has been completed exists, reading of the code data is skipped, and at step S3, the remaining code data are read by the fixed lengths and outputted. The processing is repeated until it is determined at step S4 that reading of all the code data has been completed.

In a decoding device which receives and decodes the code arrays generated by the above coding processing, the original image can be completely reproduced as long as all the code data is received and decoded. Further, even decoding is performed in the middle of code data transfer, a preferable reproduced image can be obtained.

### [Second Embodiment]

In the first embodiment, an output code arrays are generated by interleaving data reversible-encoded from respective components constructing an image by predetermined code lengths as units. In the second embodiment, the interleaving is not limited to predetermined code lengths. The interleaving is performed in subband units and bit plane units. Hereinbelow, these modifications will be described.

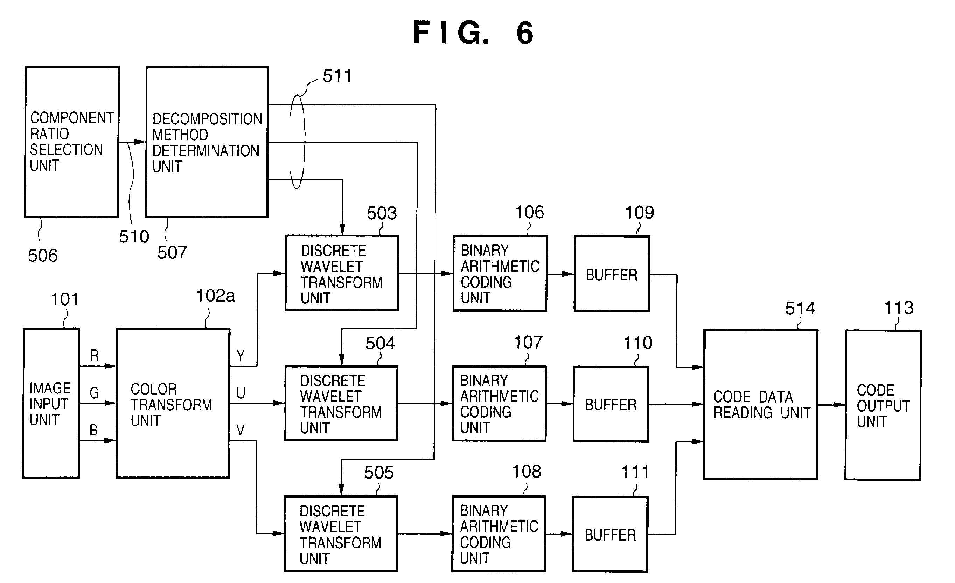

Fig. 6 is a block diagram showing the construction of the image processing apparatus according to the second embodiment of the present invention. In Fig. 6, elements corresponding to those in Fig. 1 have the same reference numerals, and the explanations of the elements will be omitted.

In Fig. 6, numerals 503 to 505 denote discrete wavelet transform units; numeral 506 denotes a component ratio selection unit; and numeral 507 denotes a decomposition method determination unit. Note that a color transform unit 102a generates Y (luminance) and U, V (chrominance) signals from RGB signals and outputs the YUV signals.

In the second embodiment, respectively 8-bit RGB color image data is encoded as in the case of the first embodiment. However, the present invention is not limited to this type of image data, but is applicable to coding of color image represented in any other color space.

Next, the operations of the respective elements of the image processing apparatus according to the second embodiment will be described in detail with reference to Fig. 6.

Prior to coding processing on a coding target image, selection information to select a ratio for interleaving the luminance component and two chrominance components is inputted into the component ratio selection unit 506, and a selection signal 510 based on the selection information is outputted to the decomposition method determination unit 507. In the second embodiment, as the ratio among the luminance component (Y) and the two chrominance components (U,V), one of [1:1:1], [2:1:1] and [4:1:1], denoted by selection numbers "0", "1" and "2", is selected. The selection number of the selected ratio is sent as the selection signal 510 to the decomposition method determination unit 507. As a particular example of the component ratio selection unit 506, a communication interface unit which receives a request from a decoder, or a user interface unit to receive a request from a user such as a keyboard may be used.

The decomposition method determination unit 507 determines a decomposition method upon decomposing the Y, U and V components generated by the color transform unit 102a into subbands by the discrete wavelet transform. The output from the decomposition method determination unit 507 is sent as a control signal 511 to the respective discrete wavelet transform units 503 to 505.

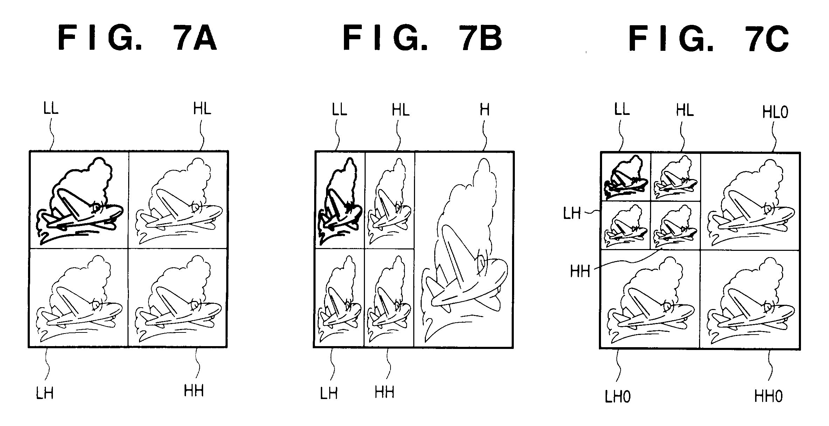

In the second embodiment, as the decomposition method, one of three types of methods as shown in Figs. 7A to 7C is selected. The value of the control signal 511 is one of "0", "1" and "2" respectively corresponding to the decomposition methods in Fig. 7A, 7B and 7C.

If the value of the selection signal 510 outputted from the component ratio selection unit 506 is "0" ([1:1:1]), the decomposition method determination unit 507 outputs the control signal 511 having the value "2" to the respective discrete wavelet transform units 503 to 505. Then as shown in Fig. 7C, the discrete wavelet transform is applied to the luminance signal (Y) and the chrominance signals (U, V) in the horizontal direction and the vertical direction, and the signals are decomposed into four LL, LHO, HLO and HHO subbands.

If the value of the selection signal 510 is "1" ([2:1:1]), the decomposition method determination unit 507 outputs the control signal 511 having the value "0" to the discrete wavelet transform unit 503, and outputs the control signal 511 having the value "1" to the discrete wavelet transform units 504 and 505. Then the luminance signal (Y) is decomposed into LL, LH, HL and HH subbands as shown in Fig. 7A, and the chrominance signals (U, V) are decomposed into LL, HL, LH, HH and H subbands as shown in Fig. 7B.

Further, if the value of the selection signal 510 is "2" ([4:1:1), the decomposition method determination unit 507 outputs the control signal 511 having the value "0" to the discrete wavelet transform unit 503, and outputs the control signal 511 having the value "2" to the discrete wavelet transform units 504 and 505. Then, the luminance signal (Y) is decomposed into the LL, LH, HL and HH subbands as shown in Fig. 7A, and the discrete wavelet transform is applied to the chrominance signals (U, V) in the horizontal and vertical directions, thus the signals are decomposed into the four LL, LHO, HLO and HHO subbands as shown in Fig. 7C.

In the second embodiment, code arrays are formed by arraying code data of the respective components, obtained by the subsequent coding unit, in subband units. That is, if the value of the control signal 511 is "0", the sizes of the respective subbands including the LL subband are the same in all the components, as shown in Fig. 7A. However, if the value of the control signal 511 is "1" or "2", as shown in Figs. 7B and 7C, the sizes of the subbands of the U and V components are smaller than the sizes of the LL, LH, HL and HH subbands of the Y component in Fig. 7A.

By this arrangement, a similar advantage to that obtained by subsampling can be attained. That is, image reproduction may be performed upon reception of LL of the luminance and chrominance components on the receiving side, otherwise, excellent color image reproduction can be made upon respective points of reception of LH, HL and HH of the luminance and chrominance components.

Next, the operation based on the construction in Fig. 6 will be described. All the pixel data representing a coding target image are inputted in raster-scan order from the image input unit 101. In the second embodiment, RGB data representing each pixel are sequentially inputted in pixel units. The image input unit 101 may be an image sensing device such as a scanner or a digital camera, or an image sensing unit such as a CCD, or an interface of a network line, or the like. When the image data constructing one pixel has been inputted from the image input unit 101, i.e., the B data has been inputted, the image data is sent to the color transform unit 102a.

The color transform unit 102a uses these three RGB values to obtain Y, U and V components by the following equations, and outputs them to the discrete wavelet transform units 503 to 505.$\text{Y=floor{(R+2G+B)/4}} \text{U=R-G+255} \text{V=B-G+255}$

Note that in the above equations (2), floor {X} means a maximum integer not exceeding X.

The obtained Y, U and V component data are temporarily stored into internal buffers of the discrete wavelet transform units 503 to 505.

In the respective discrete wavelet transform units 503 to 505, when image data for one image frame has been stored in the internal buffer, discrete wavelet transform is performed on the data while buffering is performed inside. Thus the data is decomposed into plural subbands. More specifically, first transform processing is performed in accordance with the value of the control signal 511 outputted from the decomposition method determination unit 507. Note that if the value of the control signal 511 from the decomposition method determination unit 507 is "0", the first transform processing is not performed. Further, if the value of the control signal 511 is "1", the discrete wavelet transform is performed to the data in the hori-zontal direction, to decompose the data into the two L and H subbands. Further, if the value of the control signal 511 is "2", the discrete wavelet transform is performed in the horizontal and vertical directions, to decompose the data into the four LL, LHO, HLO and HHO subbands.

Next, after the first transform processing, the two-dimensional discrete wavelet transform is applied to a portion corresponding to the lowest frequency subband (if the processing has not been performed, to the component data; if the horizontal processing has been performed, to L; if the two-dimensional transform has been performed, to LL) to obtain the four LL, LH, HL and HH subbands.

In the second embodiment, the discrete wavelet transform is based on the above-described equations (1), and as the two-dimensional discrete wavelet transform, the discrete wavelet transform is applied in horizontal and vertical directions.

Thus generated transform coefficients are stored into the internal buffers of the discrete wavelet transform units 503 to 505.

In this manner, the image data of the respective components are decomposed into subbands as shown in Figs. 7A, 7B and 7C, in accordance with the value of the control signal 511, "0", "1" or "2",respectively, from the decomposition method determination unit 507, and stored into the internal buffers of the discrete wavelet transform units 503 to 505, respectively.

When the discrete wavelet transform units 504 to 505 perform the wavelet transform on the respective components of the coding target image data, the respective binary arithmetic coding units 106 to 108 sequentially encode the wavelet transform coefficients stored in the respective discrete wavelet transform units 503 to 505 from a low frequency band to a high frequency band, and store the code data into the buffers 109 to 111, respectively. Since the coding processing on the subband coefficients by these binary arithmetic coding units 106 to 108 is the same as the processing by the arithmetic coding units in the first embodiment, the explanation of the processing will be omitted. Note that in the second embodiment, the code data stored in the buffers 109 to 111 are respectively readable in subband units.

Thus, when all the subband coefficients have been encoded by the binary arithmetic coding units 106 to 108, the code data reading unit 514 reads and outputs code data arrays corresponding to 1 subband sequentially from the buffers 109 to 111. In a buffer where all the subband code data has been read, further data reading is not performed.

The code output unit 113 outputs the code arrays outputted from the code data reading unit 514 to the outside of the apparatus. The code output unit 113 may be a storage device such as a hard disk or a memory or an interface of network line, or the like. Upon code output, header information including additional information necessary for decoding such as the numbers of horizontal and vertical pixels, the number of bits of respective R, G and B data per one pixel, and the component ratio selected by the component ratio selection unit 506 is generated, and the header information is added to the code array.

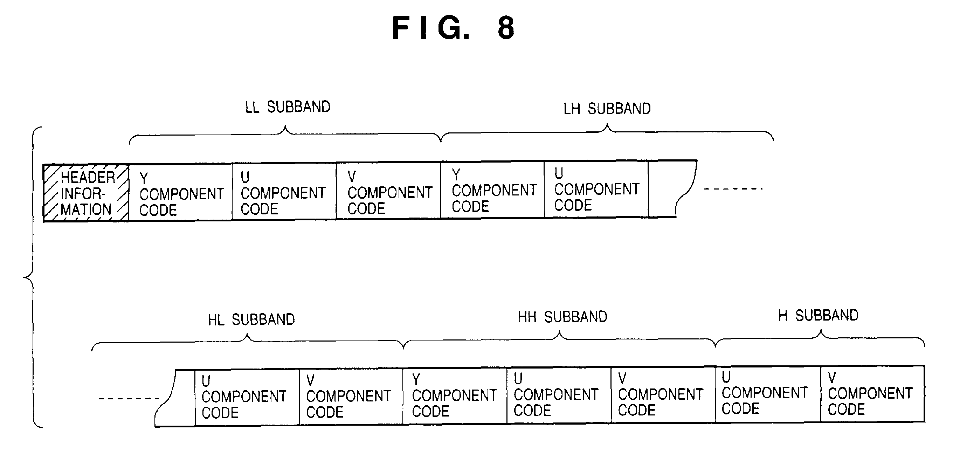

Fig. 8 shows the structure of the code array outputted from the code output unit 113 in a case where the necessary information is added as a header to the code array.

In this figure, the code array corresponds to a case where the value of the selection signal 510 outputted from the component ratio selection unit 506 is "1" ([2:1:1]). In this case, the luminance component (Y) is decomposed into the subbands as shown in Fig. 7A, and the chrominance components (U, V) are decomposed into the subbands as shown in Fig. 7B where the H subband further exists in comparison with Fig. 7A. Accordingly, the code data of the H subband is added to the end of the code arrays of the U and V components.

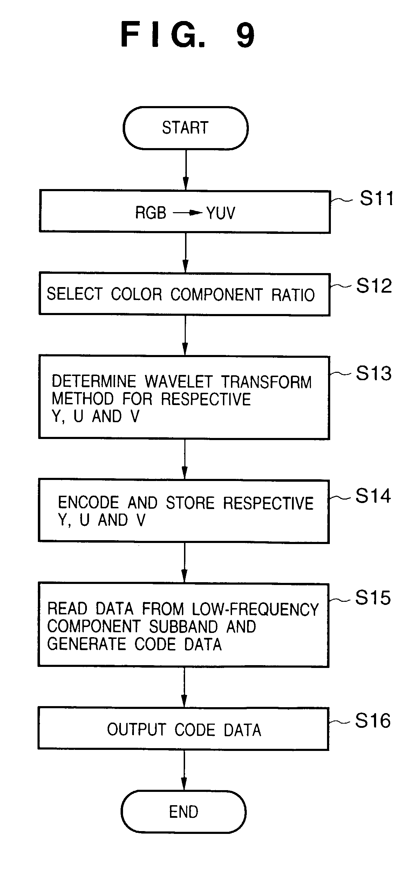

Fig. 9 is a flowchart showing the coding processing in the image processing apparatus according to the second embodiment.

First, at step S11, input RGB image signals are transformed into YUV signals. Next, at step S12, the ratio among the luminance and chrominance signals is inputted, and at step S13, the transform method in the respective discrete wavelet transform units 503 to 505 is determined in accordance with the input ratio. The coefficients obtained by the wavelet transform are encoded by the coding units 106 to 108, and stored into the buffers 109 to 111 at step S14. Next, at step S15, the code data are sequentially read from low frequency component subband, and outputted as code data at step S16.

In the decoding device which receives and decodes the code data encoded by the above processing, the original image can be completely reproduced as long as all the code data is received and decoded. Further, even in the middle of transmission of the code data, decoding and image reproduction can be made by decoding the code data received by that point, such that the original image can be preferably reproduced in the middle of transmission of the code data. In this manner, an image corresponding to the received and decoded subband can be reproduced.

### {Third Embodiment]

In the second embodiment, since the method for decomposing data into subbands is changed in accordance with a selected component ratio, the coding processing cannot be started before the component ratio is determined. In the third embodiment, a more flexible component interleaving method is provided.

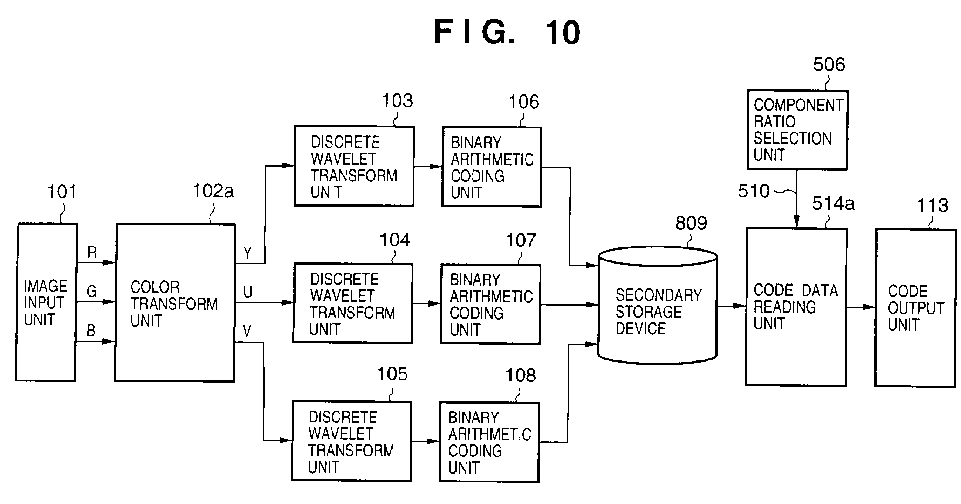

Fig. 10 is a block diagram showing the construction of the image processing apparatus according to the third embodiment of the present invention. In Fig. 10, elements corresponding to those of the previous embodiments have the same reference numerals, and the explanations of the elements will be omitted.

In Fig. 10, numeral 809 denotes a secondary storage device such as a hard disk, for storing coded respective code data arrays.

In the third embodiment, respective 8-bit RGB color image data is encoded as in the case of the first embodiment. However, the present invention is not limited to the RGB data but is applicable to coding of color image represented in any other color space.

Hereinbelow, the operations of the respective elements according to the third embodiment will be described in detail with reference to Fig. 10.

First, all the pixel data representing a coding target image are inputted in- raster-scan order from the image input unit 101. In the third embodiment, RGB data representing each pixel are sequentially inputted in pixel units. The image input unit 101 may be an image sensing device such as a scanner or a digital camera, or an image sensing unit such as a CCD, or an interface of a network line, or the like. When the image data constructing one pixel has been inputted from the image input unit 101, i.e., the B data has been inputted, the image data is sent to the color transform unit 102a.

The color transform unit 102a uses the three RGB values to obtain Y, U and V components by the above equations (2), and outputs them to the discrete wavelet transform units 103 to 105.

The obtained Y, U and V component data are temporarily stored into internal buffers of the discrete wavelet transform units 103 to 105.

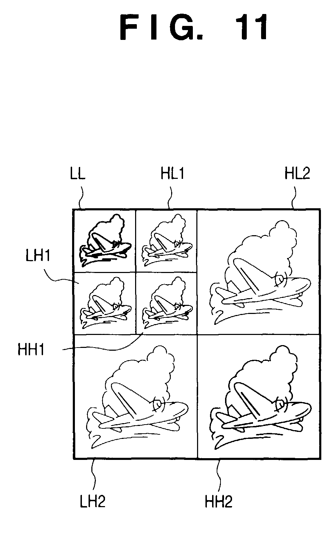

In the respective discrete wavelet transform units 103 to 105, when image data for one image frame has been stored in the internal buffer, discrete wavelet transform is performed on the data while buffering is performed inside. Thus the data is decomposed into plural subbands. The discrete wavelet transform is performed based on the above equations (1). In the third embodiment, processing to apply the discrete wavelet transform to data in horizontal and vertical directions to-obtain four LL, LH, HL and HH subbands, is repeated with respect to the LL subband, so as to generate seven LL, LH1, HL1, HH1, LH2, HL2 and HH2 subbands as shown in Fig. 11.

The generated subbands are stored into the internal buffers of the discrete wavelet transform units 103 to 105.

When the discrete wavelet transform units 103 to 105 perform the wavelet transform on the respective components of the coding target image data, the respective binary arithmetic coding units 106 to 108 sequentially encode the wavelet transform coefficients stored in the respective discrete wavelet transform units 103 to 105 from a low frequency subband to a high frequency subband, and store the code data into the secondary storage device 809. The code data stored in the secondary storage device 809 are readable in subband units by each component.

In the third embodiment, thereafter, plural forms of code arrays are generated in accordance with a component interleave request selected by the component ratio selection unit 506. The code data stored in the secondary storage device 809 is not re-encoded, but code arrays are generated by changing a code reading order in accordance with the selected component ratio. Hereinbelow, the operations of the component ratio selection unit 506, the code data reading unit 514a and the code output unit 113 will be described.

Selection information to select a ratio for interleaving the Y, U and V components is inputted into the component ratio selection unit 506. In the third embodiment, as the ratio among the Y, U and V components, one of [1:1:1] and [4:1:1] denoted by selection numbers "0" and "1" corresponding to the ratios is selected as the selection signal 510. The selection signal 510 is sent to the code data reading unit 514a. As a particular example of the component ratio selection unit 506, a communication interface unit which receives a request from a decoder, or a user interface unit to receive a request from a user such as a keyboard may be used.

The code data reading unit 514a reads code data arrays of the respective components from the secondary storage device 809 in subband units, and outputs the data arrays to the code output unit 113. If the value of the selection signal 510 outputted from the component ratio selection unit 506 is "1", the code data of the three subbands (LL, LH1 and HL1) of the Y component are read before the code data of the respective components are read in subband units. If the value of the selection signal 510 is "0", the code data of the Y component is not read first. In a buffer where all the subband code data has been read, further data reading is not performed.

The code output unit 113 outputs the code arrays outputted from the code data reading unit 514a to the outside of the apparatus. The code output unit 113 is a storage device such as a hard disk or a memory or an interface of network line, or the like. Upon code output, header information including additional information necessary for decoding such as the numbers of horizontal and vertical pixels, the number of bits of respective R, G and B data per one pixel, and the component ratio selected by the component ratio selection unit 506 is generated, and the header information is added to the code array.

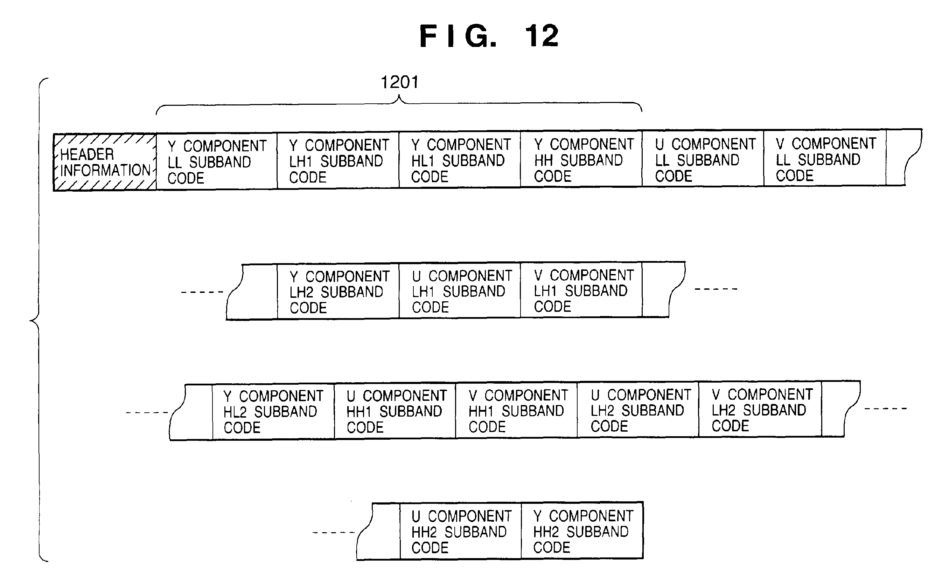

Fig. 12 shows the structure of the code array outputted from the code output unit 113 in a case where the necessary information is added as a header to the code array.

In this figure, the code array corresponds to a case where the value of the selection signal 510 outputted from the component ratio selection unit 506 is "1" ([4:1:1]). Regarding the Y component, the data of three subbands are read in advance.

In Fig. 12, as denoted by numeral 1201, the code data of the four subbands (LL, LH1, HL1 and HH) of the Y component are read in advance. Then the code data of the LL subbands of the U component and V component are read, then the code data of the LH2 subband of the Y component and the code data of the LH1 subband of the V component are read, thus the code data are sequentially read. When the code data of the HH2 subband of the Y component and the code data of the HH1 subbands of the U component and the V component are read, the code data of the LH2, HL2 and HH2 subbands of the U component and the V component are sequentially read.

On the side to receive and decode the code data array encoded by the above processing, the original image can be completely reproduced as long as all the code data array is received and decoded. Further, even in the middle of code data, an excellent image can be reproduced in correspondence with subbands received by that point. Thus a highly efficient color image coding can be realized.

### [Fourth Embodiment]

In the above second and third embodiments, the components constructing an image are interleaved in subband units. In the fourth embodiment, based on the size of decoded image, the subbands are decomposed into several sets, and code data are interleaved by each set.

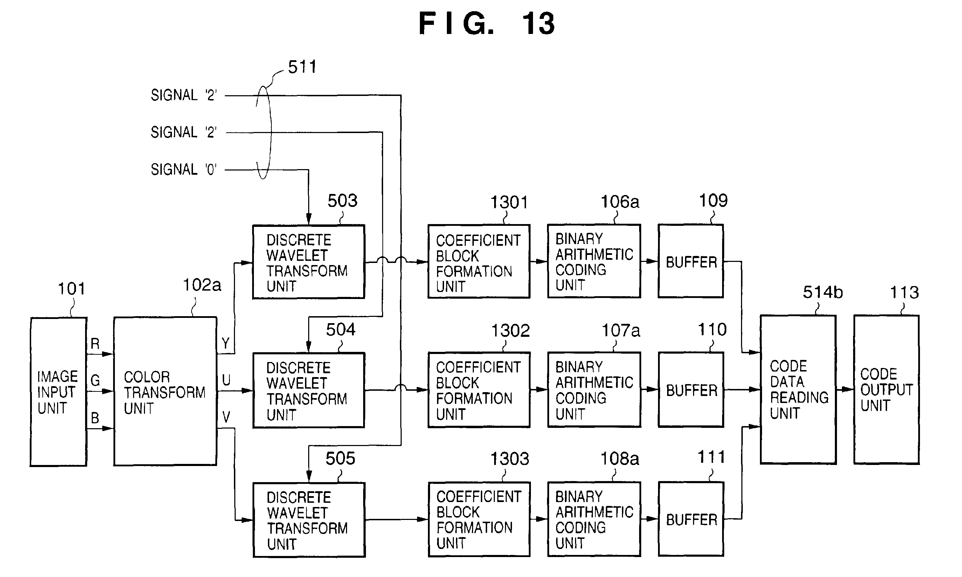

Fig. 13 is a block diagram showing the construction of the image processing apparatus according to the fourth embodiment of the present invention. In Fig. 13, elements corresponding to those of the image processing apparatus in the above embodiment (Fig. 6) have the same reference numerals, and the explanations of the elements will be omitted.

In Fig. 13, numerals 1301 to 1303 denote coefficient block formation units; numerals 106a to 108a denote binary arithmetic coding units; and numeral 514b denotes a code data reading unit.

In the fourth embodiment, respectively 8-bit RGB color image data is encoded as in the above embodiments. However, the present invention is not limited to the RGB data but is applicable to coding of color image represented in any other color space.

Hereinbelow, the operations of the respective elements of the image processing apparatus according to the fourth embodiment will be described in detail with reference to Fig. 13.

First, all the pixel data representing a coding target image are inputted in raster-scan order from the image input unit 101. In the fourth embodiment, RGB data representing each pixel are sequentially inputted in pixel units. The image input unit 101 may be an image sensing device such as a scanner or a digital camera, or an image sensing unit such as a CCD, or an interface of a network line, or the like. When the image data constructing one pixel has been inputted from the image input unit 101, i.e., the B data has been inputted, the image data is sent to the color transform unit 102a.

The color transform unit 102a uses the three RGB values to obtain Y, U and V components by the above equations (2), and outputs them to the discrete wavelet transform units 503 to 505. The Y, U and V component data are temporarily stored into internal buffers of the discrete wavelet transform units 503 to 505.

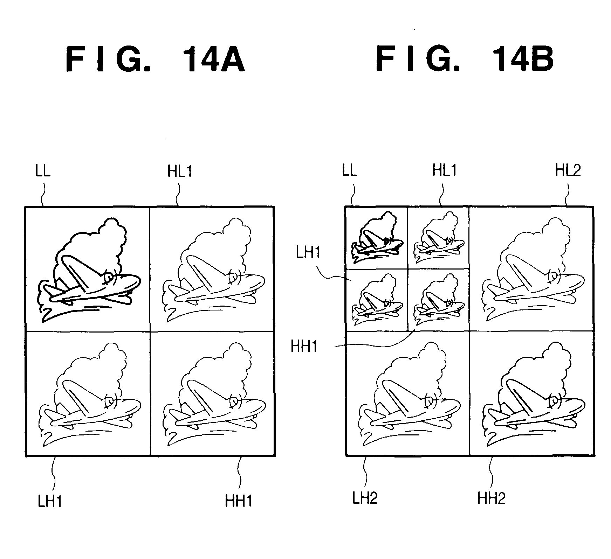

In the respective discrete wavelet transform units 503 to 505, when image data for one image frame has been stored in the internal buffer, discrete wavelet transform is performed on the data while buffering is performed inside. Thus the data is decomposed into plural subbands. As described in the second embodiment, the decomposition method can be changed in accordance with the value of the control signal 511 in these discrete wavelet transform units 503 to 505. In the fourth embodiment, the value of the control signal 511 sent to the respective discrete wavelet transform units is fixed. Accordingly, regarding the Y component, the two-dimensional discrete wavelet transform is applied once, thereby the data is decomposed into four subbands as shown in Fig. 14A, and regarding the U and V components, the two-dimensional discrete wavelet transform is applied twice, thereby the data is decomposed into seven subbands as shown in Fig. 14B.

In the fourth embodiment, the one-dimensional discrete wavelet transform is performed based on the above equations (1), and the two-dimensional discrete wavelet transform is performed by applying the one-dimensional discrete wavelet transform in horizontal and vertical directions.

The generated transform coefficients are stored into the internal buffers of the discrete wavelet transform units 503 to 505.

When the discrete wavelet transform units 504 to 505 perform the wavelet transform on the respective components of the coding target image data, the respective block formation units 1301 to 1303 sequentially read the wavelet transform coefficients stored in the respective discrete wavelet transform units 503 to 505 from a low frequency subband to a high frequency subband. At this time, the respective subbands are separated into fixed size blocks, and the transform coefficients are read in block (hereinafter referred to as a "coefficient block") units. The read transform coefficients are sent to the binary arithmetic coding units 106a to 108a.

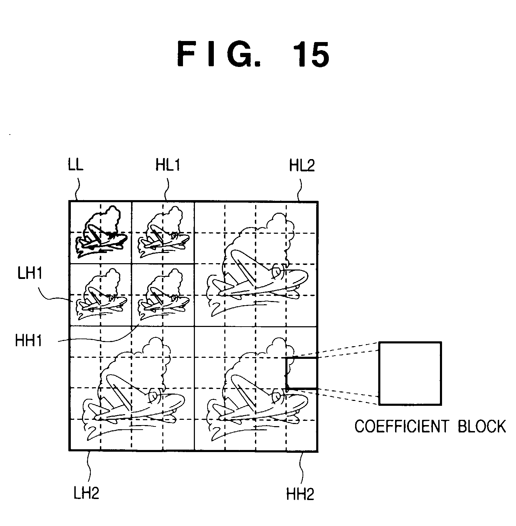

Fig. 15 shows an example where the seven subbands of the U and V components generated by the discrete wavelet transform units 504 and 505 are decomposed into the coefficient blocks.

The binary arithmetic coding units 106a to 108a encode the transform coefficients read from the respective coefficient block formation units 1301 to 1303 in coefficient block units, and store the code data into the buffers 109 to 111. The coding processing performed by the binary arithmetic coding units 106a to 108a on the transform coefficients is the same as the processing by the binary arithmetic coding units in the above-described embodiment except that the coding is performed by unit of coefficient block formed in the respective coefficient block formation units, therefore, the explanation of the processing will be omitted. Note that in the fourth embodiment, the code data of each coefficient block is decomposed into two data and stored. That is, assuming that code data of some coefficient block (B) of some subband (S) is C(S,B), the code data is decomposed by a predetermined bit plane, into code data C0(S,B) of higher-order bit plane, and code data C1(S,B) of lower-order bit plane, and these code data are separately stored.

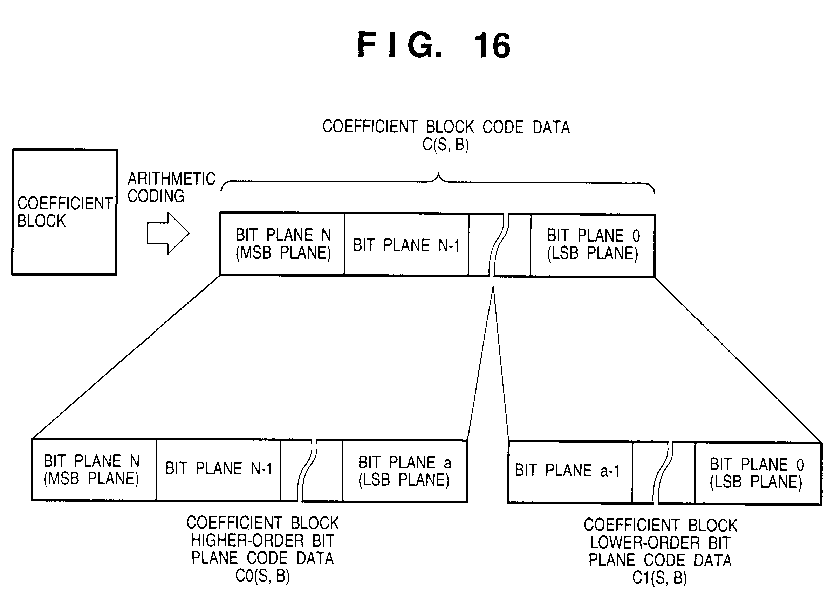

Fig. 16 is an explanatory view of dividing coefficient block code data into higher-order bit plane code data and lower-bit plane code data. In this figure, the code data C(S,B) of coefficient block (B) is decomposed into the high-order bit plane code data C0(S,B) and the lower-order bit plane code data C1(S,B).

The code data reading unit 514b reads the code data stored in the buffers 109 to 111 and sent the data to the code output unit 113. When the code data are read, in consideration of image size reproducible by reverse discrete wavelet transform on the decoding side, the level of the LL subband is defined as 0, the level of the HL1, LH1 and HH1 subbands, as 1, and the level of the HL2, LH2 and HH2, as 2, and the code data are read from the level 0 to the level 2. Further, at each level, when the higher-order bit plane code data of all the coefficient blocks of the level have been read, the lower-order bit plane code data of all the coefficient blocks are read.

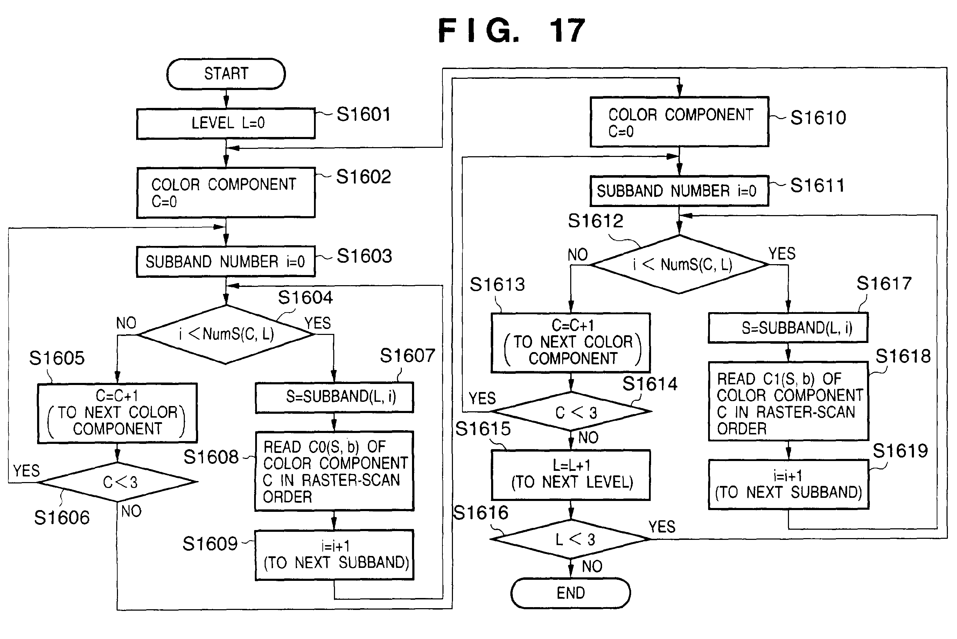

Fig. 17 is a flowchart showing processing by the code data reading unit 514b according to the fourth embodiment. The operation of the code data reading unit 514b will be described in more detail with reference to the flowchart.

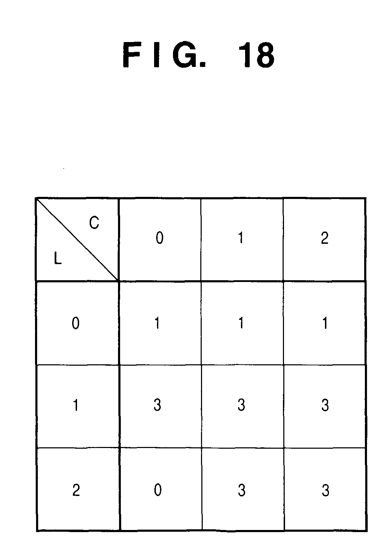

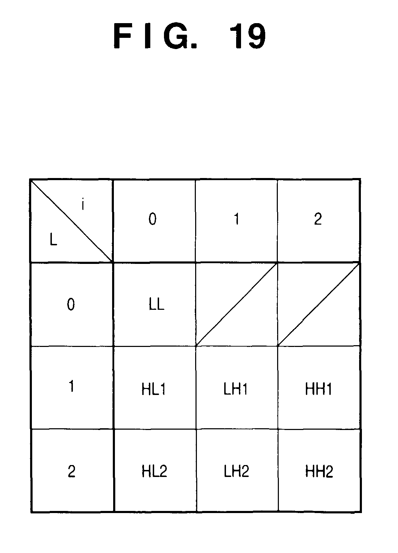

First, at respective steps S1601 to S1603, respective variables of level (L), color component (C) and subband number (i) are initialized to "0". Note that a number of color component C is allocated from "0" from Y, then U to, V. If C=0 holds, the component is Y; if C=1 holds, the color component is U; and if C=2 holds, the color component is V. Next, the process proceeds to step S1604, at which the subband number i is compared with a function NumS(C,L). The function NumS(C,L) represents the number of subbands belonging to level 0 of the color component C. In the subband decomposition of the fourth embodiment, a value as shown in Fig. 18 is returned. Next, the process proceeds to step S1604, at which it is determined whether or not i<NumS(C,L) holds. If YES, the process proceeds to step S1607, otherwise, proceeds to step S1605. At step S1607, the subband S is specified from the level L and the subband number i. Note that in the subband decomposition of the fourth embodiment, a value of Subband(L,i) as shown in Fig. 19 is returned.

Next, the process proceeds to step S1608, at which C0(S,B) of the color component C is read from any one of the buffers 109 to 111 in accordance with the designated color component C, and outputted to the code output unit 113. Note that the number of coefficient blocks within the subband of interest of the color component is Nb, and the respective coefficient blocks are numbered from "0" in raster scan order. The higher-order bit plane code data of the coefficient blocks are read in a loop from 0 to (Nb-1). Next, at step S1609, a value "1" is added to the subband number i, and the process moves toward the next subband.

On the other hand, if it is determined at step S1604 that i<NumS(C,L) does not hold, as reading of coefficient code data of all the subbands of the color component (C) of interest and the level (L) of interest has been completed, the process proceeds to step S1605, at which a value "1" is added to the variable C, and the process moves toward the next color component. At step S1606, it is determined whether or not processing for all the components at the level of interest has been completed. If there is unprocessed color component (C<3), the process returns to step S1603, while if it is determined that reading of all the color components has been completed, the process proceeds to step S1610. Since processing at steps S1610 to S1614 and processing at steps S1617 to S1619 are the same as the processing at steps S1602 to S1606 and the processing at steps S1607 to S1609, respectively, except for that C1(S,B) is read at the step 1618 in place of C0(S,B) at the step S1608, the explanations of the processes will be omitted.

The code output unit 113 outputs the code array outputted from the code data reading unit 514b to the outside of the apparatus. The code output unit 113 is a storage device such as a hard disk or a memory or an interface of network line, or the like. Upon code output from the code output unit 113, a header including additional information necessary for decoding such as the numbers of horizontal and vertical pixels, the number of bits of respective R, G and B data per one pixel, and the numbers of discrete wavelet transforms for the respective components is generated, and the header is added to the code array.

In this manner, if the level L is "0", the higher-order and lower-order bit plane code data of LL subbands are read for the respective Y, U and V color components, and outputted from the code output unit 113. If the level L is "1", the code data of the Y, U and V color components are read from the LL subband. The higher-order and lower-order bit plane code data are read, to the HL1 subband of the Y component, to the LH1 subband of the U component, and to the HH1 subband of the V component, respectively, and outputted from the code output unit 113. Further, if the level L is "2", the code data of the U and V color components are read from the LL subbands. The higher-order and lower-order bit plane code data are read, to the LH2 subband of the U component, and to the HH2 subband of the V component, respectively, and outputted from the code output unit 113.

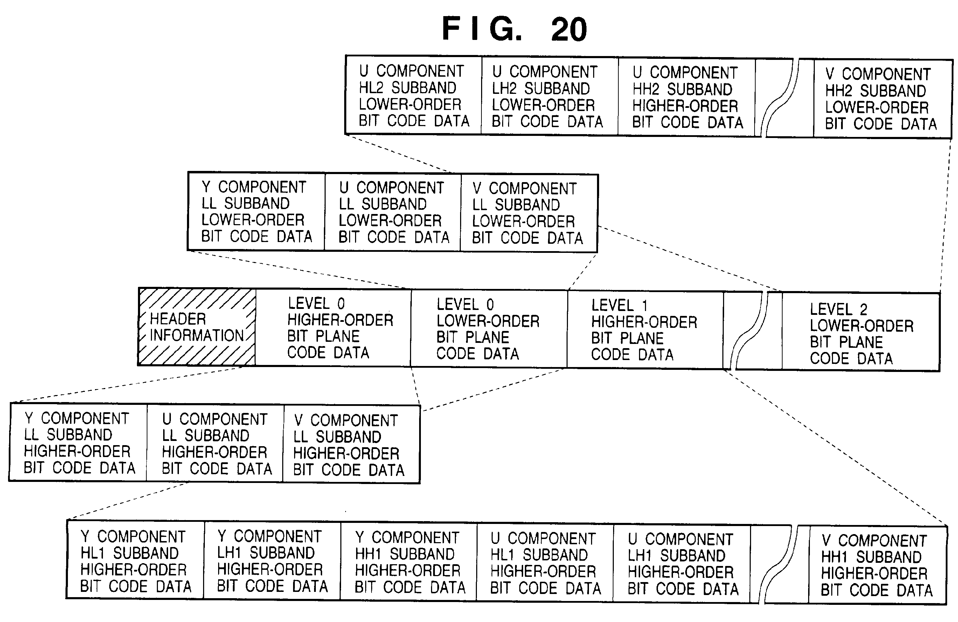

Fig. 20 shows the structure of the code data array outputted from the code output unit 113 in a case where the necessary information is added as a header to the code array.

By this arrangement of code data array, in the decoding device which effectively decodes the code data arrays, when the high-order bit plane code data at the level 0 has been received and decoded, an image 1/2 size of the original image can be reproduced by performing up-sampling and reverse color transform on the coefficients of the U and V components. Further, when the lower-order bit plane code data at the level 0 has been received, a high-quality 1/2 size image can be reproduced by the same procedure.

In these stages, in comparison with the transform coefficients of the Y component, the numbers of the transform coefficients of the U and V components are reduced to 1/4 as code data obtained in consideration of visual characteristic of human eye. Further, by receiving and decoding the higher-order and lower-order bit plane code data at the level 1 and by similarly performing upsampling and reverse color transform on the transform coefficient data of the U and V components, an image of the same size of the original image can be reproduced. In this stage, image data of the Y component can be completely reproducible, and image data of the U and V components are distorted. The original image can be reproduced without degradation by further receiving the higher-order and lower-order bit plane code data at the level 2 and decoding the data.

By the above processing, the original image can be completely reproduced without degradation by receiving and decoding all -the code data array, and further, even in the middle of code data, an excellent image can be reproduced in accordance with the subband received by the point. Thus highly efficient color image coding can be realized.

### [Other Embodiments]

The present invention is not limited to the above-described embodiments. For example, in the first to fourth embodiments, coding is made by using discrete wavelet transform, however, the discrete wavelet transform is not limited to that shown in the embodiments. As long as the discrete wavelet transform has reversibility, the filter type, the application method and the like may be changed. For example, in the embodiments, the buffers for storing data for one image frame are prepared for application of the discrete wavelet transform, however, the buffers may be replaced with plural line buffers for transform processing in line units. Further, the present invention may be applied to any coding method based on Hadamard transformation and the like other than the discrete wavelet transform. Further, the coefficient coding method is not limited to that in the above embodiments. For example, MQ-Coder and the like other than the QM-Coder arithmetic coding may be applied to the coefficient coding, and further, other entropy coding methods may be employed.

In the above described embodiments (particularly, the second embodiment and the like), the description is made in a case where a color image of which each pixel is represented RGB, each having 8 bits, is transformed into YUV spaces to encode image data of the color image, and U and V components are decomposed into subbands in the same way. However, if a color image of which each pixel is represented RGB is encoded, then R, G and B components of the color image are decomposed into subbands in a different way from each other, so as to encode image data of the color image. In other words, according to the present invention, with consideration with the differences of importance in at least two color components constructing image data representing a color image, a method for decomposing each color component into subbands is different from each other such that each of the above described embodiments can be adopted to the present invention.

The present invention can be applied to a system constituted by a plurality of devices (e.g., a host computer, an interface, a reader and a printer) or to an apparatus comprising a single device (e.g., a copy machine or a facsimile apparatus or a digital camera).

Further, the object of the present invention can be also achieved by providing a storage medium storing software program code for realizing the above embodiments to a system or an apparatus, reading the program code with a computer (e.g., CPU, MPU) of the system or apparatus from the storage medium, then operating the above respective devices in accordance with the program code.

In this case, the software program code read from the storage medium realizes the functions according to the embodiments, and the program code itself and means for providing the program code to the computer, specifically, the storage medium storing the program code, are included in the scope of the invention.

Further, as the storage medium containing the program code, a floppy disk, a hard disk, an optical disk, a magneto-optical disk, a CD-ROM, a CD-R, a magnetic tape, a non-volatile type memory card, a ROM and the like can be used.

Furthermore, besides aforesaid functions according to the above embodiments are realized by the computer's control on the respective devices in accordance with the program code, the program code is included in the scope of the present invention in a case where the above embodiments are realized by the program code in cooperation with an OS (Operating System) or the like working on the computer or other application software.

Furthermore, the present invention also includes a case where, after the program code read from the storage medium is written in a function expansion card which is inserted into the computer or in a memory provided in a function expansion unit which is connected to the computer, CPU or the like contained in the function expansion card or unit performs a part or entire process in accordance with designations of the program code and realizes functions of the above embodiments.

As described above, according to the present invention, plural components constructing image data are encoded by reversible-coding in a manner such that the components can be respectively reproduced in the middle of code data transmission. The code data arrays are generated by repeating the respective code data of the components in predetermined units. When the code data arrays are received and decoded, an image in excellent image quality can be reproduced in the middle of code data array.

Further, when all the code data has been received, the original image can be reproduced with high fidelity.

The present invention is not limited to the above embodiments'and various changes and modifications can be made within the spirit and scope of the present invention. Therefore, to appraise the public of the scope of the present invention, the following claims are made.

## Claims

1. An image processing apparatus characterized by comprising:
discrete wavelet transform means for performing discrete wavelet transform on respective plural components constructing image data;
coefficient coding means for encoding coefficients of subbands generated by said discrete wavelet transform means; and
code data generation means for generating code data, with respect to the respective plural components, by arraying respective code data in a predetermined ratio.

2. An image processing apparatus characterized by comprising:
discrete wavelet transform means for performing discrete wavelet transform on respective plural components constructing image data;
coefficient coding means for encoding coefficients of subbands generated by said discrete wavelet transform means; and
code data generation means for generating code data by arraying respective code data of said plural components in subband units,
wherein said discrete wavelet transform means decomposes said plural components into different numbers of subbands for at least two components, and wherein said code data generation means generates the code data by arraying the code data of said plural components in subband units.

3. The image processing apparatus according to claim 2, characterized in that said at least two components constructing said image data are a luminance component and chrominance components.

4. The image processing apparatus according to claim 2, characterized in that said code data generation means sequentially arrays said code data from a low frequency subband.

5. An image processing method characterized by comprising:
a discrete wavelet transform step of performing discrete wavelet transform on respective plural components constructing image data;
a coefficient coding step of encoding coefficients of subbands generated in said discrete wavelet transform step; and
a code data generation step of generating code data, with respect to the respective plural components, by arraying respective code data in a predetermined ratio.

6. An image processing method characterized by comprising:
a discrete wavelet transform step of performing discrete wavelet transform on respective plural components constructing image data;
a coefficient coding step of encoding coefficients of subbands generated at said discrete wavelet transform step; and
a code data generation step of generating code data by arraying respective code data of said plural components in subband units,
wherein at said discrete wavelet transform step, said plural components are decomposed into different numbers of subbands for at least two components, and wherein at said code data generation step, the code data is generated by arraying the code data of said plural components in subband units.

7. The image processing method according to claim 6, characterized in that said plural components constructing image data include a luminance component and chrominance components.

8. The image processing method according to claim 6, characterized in that at said code data generation step, said code data is sequentially arrayed from a low frequency subband.

9. An image processing apparatus characterized by comprising:
discrete wavelet transform means for performing discrete wavelet transform on respective plural components constructing image data;
coefficient coding means for encoding coefficients of subbands generated by said discrete wavelet transform means; and
code data generation means for generating code data by arraying code data corresponding to said respective plural components encoded by said coefficient coding means,
wherein said discrete wavelet transform means decomposes said respective plural components into different numbers of subbands for at least two components, and wherein said code data generation means generates the code data by arraying a part or whole of code data of subbands at the same level among the code data corresponding to said respective plural components.

10. The image processing apparatus according to claim 9, characterized in that said plural components constructing said image data includes a luminance component and a chrominance component, and the number of applications of discrete wavelet transform by said discrete wavelet transform means for said chrominance components is larger than that for said luminance component.

11. An image processing method characterized by comprising:
a discrete wavelet transform step of performing discrete wavelet transform on respective plural components constructing image data;
a coefficient coding step of encoding coefficients of subbands generated at said discrete wavelet transform step; and
a code data generation step of generating code data by arraying code data corresponding to said respective plural components encoded at said coefficient coding step,
wherein at said discrete wavelet transform step, said respective plural components are decomposed into different numbers of subbands for at least two components, and wherein at said code data generation step, the code data is generated by arraying a part or whole of code data of subbands at the same level among the code data corresponding to said respective plural components.

12. The image processing method according to claim 11, characterized in that said plural components constructing said image data includes a luminance component and a chrominance component, and the number of applications of discrete wavelet transform at said discrete wavelet transform step for said chrominance components is larger than that for said luminance component.

13. A computer-readable storage medium containing a program for execution of image processing method, said program characterized by comprising:
a discrete wavelet transform module of performing discrete wavelet transform on respective plural components constructing image data;
a coefficient coding module of encoding coefficients of subbands generated in said discrete wavelet transform module; and
a code data generation module of generating code data by arraying respective code data in a predetermined ratio.

14. A computer-readable storage medium containing a program for execution of image processing method, said program characterized by comprising:
a discrete wavelet transform module of performing discrete wavelet transform on respective plural components constructing image data;
a coefficient coding module of encoding coefficients of subbands generated in said discrete wavelet transform module; and
a code data generation module of generating code data by arraying respective code data of said plural components subband units,
wherein in said discrete wavelet transform module, said plural components are decomposed into different numbers of subbands for at least two components, and wherein in said code data generation module, the code data is generated by arraying the code data of said plural components in subband units.

15. A computer-readable storage medium containing a program for execution of image processing method, said program characterized by comprising:
a discrete wavelet transform module of performing discrete wavelet transform on respective plural components constructing image data;
a coefficient coding module of encoding coefficients of subbands generated in said discrete wavelet transform module; and
a code data generation module of generating code data by arraying code data corresponding to said respective plural components encoded in said coefficient coding module,
wherein in said discrete wavelet transform module, said respective plural components are decomposed into different numbers of subbands for at least two components, and wherein in said code data generation module, the code data is generated by arraying a part or whole of code data of subbands at the same level among the code data corresponding to said respective plural components.
